# EUROPÄISCHE PATENTSCHRIFT

(11) **EP 0 570 088 B1**
(45) Veröffentlichungstag und Bekanntmachung des Hinweises auf die Patenterteilung: **18.09.1996**
(21) Anmeldenummer: 93250127.3
(22) Anmeldetag: 05.05.1993
(51) Int. Cl.: B26D 7/00, B26B 5/00, A47J 43/25

(54) **Vorrichtung zum Zerkleinern von Nahrungsmitteln**
Food cutter
Dispositif de coupe des aliments

(30) Priorität: 13.05.1992 DE 9206592 U
(43) Veröffentlichungstag der Anmeldung: 18.11.1993
(73) Patentinhaber: H. Zenker GmbH + Co. KG Metallwarenfabrik, 86542 Aichach (DE)
(72) Erfinder: Zenker, Wolfgang, D-86551 Aichach (DE); Zenker, Hermann, D-86551 Aichach (DE); Sandmeier, Karin, D-86551 Aichach-Unterwittelsbach (DE)
(74) Vertreter: Ninnemann, Detlef, Dipl.-Ing.

(56) Entgegenhaltungen:
- FR-A- 1 108 416
- US-A- 4 805 843

## Beschreibung

Die Erfindung betrifft eine Vorrichtung zum Zerkleinern von Nahrungsmitteln gemäß dem Oberbegriff des Anspruchs 1 (DE-C2-37 00 013).

Aus der DE-C2-37 00 013 ist ein Vorrichtung zum Zerkleinern von Nahrungsmitteln bekannt, die aus einer mit einem Handgriff versehenen, länglichen Grundplatte besteht, über deren Oberfläche das zu zerkleinernde Gut von Hand hin- und herbewegbar ist. Die Grundplatte weist in ihrem mittleren Bereich eine bis zur Unterseite durchgehende Ausnehmung auf, in die jeweils einer von mehreren unterschiedlichen Zerkleinerungseinsätzen bündig in die Grundplatte einsetzbar ist. Ferner sind an der Unterseite der Längsstege der Grundplatte halbkreisförmige Ausnehmungen ausgebildet, die eine formschlüssige Auflage der bekannten Vorrichtung auf ein Auffanggefäß ermöglichen.

Aus der DE-U1-88 01 918 ist ein Zwiebelschneider bekannt, der eine Aufnahme mit einer Vielzahl von Stiften aufweist, an denen eine Zwiebel zu befestigen ist. Den Stiften ist eine erste, mit mehreren Messern ausgerüstete Schneideinrichtung und dieser um 90° versetzt eine zweite, gleichartige Schneideinrichtung zugeordnet. Beide Schneideinrichtungen sind um Achsen schwenkbar angeordnet und mit bügelförmigen Griffen versehen, die fest an den Schneidvorrichtungen angebracht sind.

Bei der Benutzung einer derartigen Vorrichtung ohne ein Auffanggefäß oder ohne Auflage auf den Rand eines Auffanggefäßes ergibt sich für den Benutzer eine ergonomisch ungünstige Handhabung, da die zur Zerkleinerung der Nahrungsmittel erforderliche Andruckkraft insbesondere bei Schrägstellung der Grundplatte gegen die zur Fixierung der Vorrichtung aufzuwendende Haltekraft gerichtet ist. Beim Gebrauch der bekannten Vorrichtungen stellt sich somit eine schnellere Ermüdung des Benutzers ein, so daß dessen Aufmerksamkeit sinkt und die Verletzungsgefahr an den scharfen Schneidkanten der bekannten Vorrichtungen steigt.

Aufgabe der vorliegenden Erfindung ist es, eine Vorrichtung der eingangs genannten Art zu schaffen, die eine ergonomisch günstige und damit sichere Handhabung sowohl bei einer Abstützung bzw. Auflage auf den Rand eines Auffanggefäßes oder einer sonstigen Auflagefläche als auch beim Gebrauch ohne jegliche Abstützung ermöglicht.

Diese Aufgabe wird durch die Merkmale des Anspruchs 1 gelöst.

Die erfindungsgemäße Lösung ergibt eine Vorrichtung zum Zerkleinern von Nahrungsmitteln, die einen schwenkbar an der Grundplatte gelagerten Handgriff aufweist. Der Handgriff kann somit bei jeder gewählten Handhabungsart gegenüber der Grundplatte in eine für den Benutzer ergonomisch günstige Stellung abgewinkelt werden, so daß die Handhabungssicherheit jeweils optimal ist.

Eine vorteilhafte Ausgestaltung der erfindungsgemäßen Lösung besteht darin, daß der schwenkbare Handgriff arretierbar ist. Durch diese Ausgestaltung wird erreicht, daß der Handgriff in jeder Position an der Grundplatte feststellbar ist, so daß bei entsprechender Handgriffeinstellung hauptsächlich nur noch eine Andruckkraft für die Zerkleinerung eines entlang der Grundplattenoberfläche hin-und herbewegten Nahrungsmittels aufgebracht werden muß.

Eine weitere vorteilhafte Ausgestaltung der Vorrichtung ist dadurch gekennzeichnet, daß der Handgriff mit einer Achse versehen ist, die in mindestens eine mit der Grundplatte verbundene Halterung einsetzbar ist, wobei der Handgriff mittels einer Schraubverbindung an der Halterung arretierbar ist. Durch diese Ausgestaltung ist die Vorrichtung derart zerlegbar, daß der Handgriff und die Grundplatte für eine Reinigung optimal zugänglich sind.

In einer bevorzugten Ausführungsform der Erfindung ist die Halterung zur Aufnahme des Handgriffs kreisschalenförmig ausgebildet und mit einer U-förmigen, radial geöffneten Ausnehmung versehen, in die die Achse des Handgriffs derart einsetzbar ist, daß an der Halterung ein Achsabschnitt absteht, auf den eine Ringscheibe formschlüssig in die Halterung aufschiebbar ist, wobei die Achse mit mindestens einem Gewinde und mindestens einer aufschraubbaren Kappe versehen ist. Diese vorteilhafte Ausgestaltung gewährleistet eine robuste Lagerung des schwenkbaren und von der Grundplatte abtrennbaren Handgriffs sowie dessen stufenlose Arretierbarkeit im gesamten Schwenkbereich.

Eine weitere vorteilhafte Ausgestaltung ist dadurch gekennzeichnet, daß der Handgriff an seiner Unter- und/oder Oberseite mit Rippen versehen ist. Durch diese Ausgestaltung erhält der Handgriff eine optimale Griffigkeit, die die Handhabungssicherheit der Vorrichtung weiter erhöht.

Nach einer anderen vorteilhaften Ausgestaltung ist die Grundplatte der Vorrichtung an ihrer dem Handgriff gegenüberliegenden Kante mit mindestens einem rutschhemmenden Element versehen, das vorzugsweise aus einem längsgeschlitzten, mit Längsrippen versehenen Gummischlauch besteht, der mit einem an der Grundplatte ausgebildeten, im Querschnitt kreisflächig erweiterten Steg form- und/oder reibschlüssig verbindbar ist. Durch diese Ausgestaltung wird eine sichere Handhabung der schräggestellten Vorrichtung auch auf Auflageflächen mit glatter Oberfläche gewährleistet.

Weitere bevorzugte Ausgestaltungen der Erfindung sind in den Unteransprüchen gekennzeichnet. Ein Ausführungsbeispiel der Erfindung ist in der Zeichnung dargestellt und im folgenden näher beschrieben.

Es zeigen:
- Figur 1: eine Draufsicht auf eine Vorrichtung zum Zerkleinern von Nahrungsmitteln;
- Figur 2: eine Seitenansicht der in Figur 1 dargestellten Vorrichtung mit abgewinkeltem Handgriff und
- Figur 3: eine Seitenansicht der freigelegten Achse des Handgriffs.

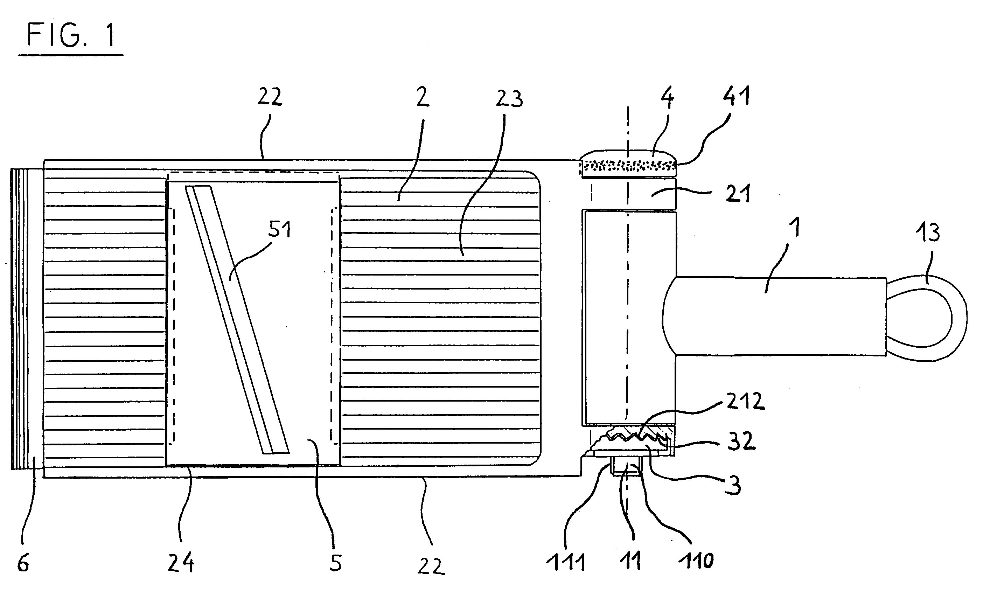

Die in Figur 1 dargestellte, zur Zerkleinerung von Nahrungsmitteln dienende Vorrichtung besteht aus einer mit einem Handgriff 1 versehenen, länglichen Grundplatte 2, über deren Oberfläche 23 das zu zerkleinernde Gut von Hand hin-und herbewegbar ist. Die Grundplatte 2 weist dabei in ihrem mittleren Bereich eine bis zur Unterseite durchgehende Ausnehmung 24, in die ein Zerkleinerungselement 5 eingesetzt ist, das eine schrägverlaufende Schneidkante 51 aufweist und dessen Oberseite bündig mit der vorzugsweise gewellt ausgebildetenGrundplattenoberfläche 23 abschließt.

Die Grundplatte 2 weist zwei parallel ausgerichtete, kreisschalenförmig ausgebildete Halterungen 21 auf, in denen der Handgriff 1 schwenkbar gelagert ist.

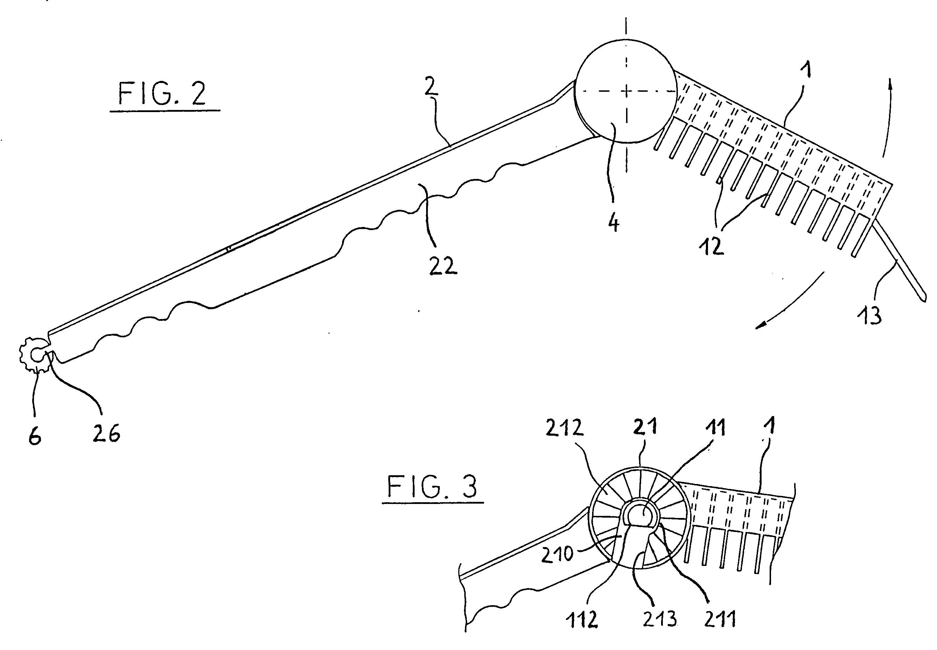

Der T-förmig ausgebildete Handgriff 1 ist mit einer Achse 11 versehen, die in den Halterungen 21 jeweils in eine - in Figur 3 näher dargestellte - Ausnehmung 210 einsetzbar ist. Die Achse 11 weist von den Halterungen 21 abstehende Achsabschnitte 110 auf, die jeweils mit einem Gewinde 111 und einer aufschraubbaren Kappe 4 versehen sind. Mittels dieser Schraubverbindung kann der schwenkbare Handgriff 1 in verschiedenen Lagen arretiert werden. Die beiden Kappen 4 sind dabei vorzugsweise mit einer profilierten Griffläche 41 versehen.

Innerhalb der kreisschalenförmigen Halterungen 21 sind vorzugsweise Ringscheiben 3 angeordnet, die formschlüssig auf die Achsabschnitte 110 aufschiebbar sind. Die Ringschreiben 3 und die Halterungen 21 weisen jeweils eine ineinandergreifende Verzahnung 32, 212 auf, so daß der Handgriff 1 in diesem Fall stufenweise arretierbar ist.

Figur 2 zeigt eine Seitenansicht, der in Figur 1 dargestellten Vorrichtung, wobei der Handgriff 1 jedoch gegenüber der Grundplatte 2 nach unten hin abgewinkelt ist.

Der Handgriff ist an seiner Unterseite mit Rippen 12 versehen, die der Vorrichtung eine deren Handhabungssicherheit erhöhende Griffigkeit verleihen. Ferner ist der Handgriff 1 mit einer Aufhängeschlaufe 13 versehen, mittels der die Vorrichtung an einem Haken oder dergleichen angehängt werden kann.

Der Schwenkbereich des Handgriffs 1 beträgt etwa 230°, wobei er gegenüber der Ebene der Grundplatte 2 um etwa 90° nach oben und um etwa 140° nach unten abgewinkelt werden kann. Ferner kann der Handgriff 1 nach Abschrauben der Kappen 4 und Entfernen der Ringscheiben aus den Halterungen von der Grundplatte 2 getrennt werden. Auch ein umgekehrter Einbau des Handgriffs 1 mit nach oben zeigenden Rippen 12 ist bei dem dargestellten Ausführungsbeispiel möglich.

Die Grundplatte 2 ist ferner an ihrer dem Handgriff 1 gegenüberliegenden Kante mit einem rutschhemmenden Element versehen, das vorzugsweise aus einem längsgeschlitzten, mit Längsrippen versehenen Gummischlauch 6 besteht. Zur Befestigung des Gummischlauchs 6 ist an der Grundplatte 2 ein im Querschnitt kreisflächig erweiterter Steg 26 angeordnet, auf den der längsgeschlitzte Gummischlauch 6 form- und reibschlüssig aufschiebbar ist.

Zur formschlüssigen Auflage der Vorrichtung auf ein Auffanggefäß sind die nach unten gerichteten Seitenstege 22 der Grundplatte 2 in an sich bekannter Weise mit wellenförmigen Unterkanten versehen.

Eine Seitenansicht der freigelegten Achse 11 des Handgriffs 1 ist in Figur 3 dargestellt. Der von den Halterungen 21 jeweils abstehende Abschnitt der Achse 11 weist eine Abflachung 112 auf. Dementsprechend ist die in Figur 1 dargestellte Ringscheibe 3 jeweils mit einer halbmondförmig ausgebildeten Ringöffnung versehen.

In Figur 3 ist ferner verdeutlicht, daß die jeweilige Ausnehmung 210 der Halterung 21 U-förmig ausgebildet und radial geöffnet ist. Vorzugsweise besteht sie aus einer Kreisöffnung 211 und einem gegenüber dem Kreisdurchmesser verjüngten Außenabschnitt 213, in den die Achse 11 nur dann einsetzbar ist, wenn deren Abflachung 112 im wesentlichen parallel zur Einsetzrichtung ausgerichtet ist.

Vorzugsweise ist die Abflachung 112 derart ausgebildet, daß sie parallel zur Längsachse des Handgriffs 1 verläuft, während die Ausnehmung 210 in der Halterung 21 an den nach unten gerichteten Längssteg 22 der Grundplatte grenzt. Durch diese Ausgestaltung ist sichergestellt, daß die Achse 11 in den üblichen Positionen des Handgriffs 1 in den Halterungen 21 auch ohne darin eingesetzte Ringscheiben formschlüssig gelagert ist.

## Patentansprüche

1. Vorrichtung zum Zerkleinern von Nahrungsmitteln, bestehend aus einer mit einem Handgriff (1) versehenen Grundplatte (2), über deren Oberfläche (23) das zu zerkleinernde Gut hin- und herbewegbar ist, und einem in der Grundplatte (2) angeordneten Zerkleinerungselement (5),
**dadurch gekennzeichnet,**
daß der Handgriff (1) schwenkbar mit der Grundplatte (2) verbunden ist.

2. Vorrichtung nach Anspruch 1, **dadurch gekennzeichnet,** daß der schwenkbare Handgriff (1) in jeder Winkelstellung zur Grundplatte (2) arretierbar ist.

3. Vorrichtung nach Anspruch 1 oder 2, **dadurch gekennzeichnet,** daß der Handgriff (1) mit einer Achse (11) versehen ist, die in mindestens eine mit der Grundplatte (2) verbundene Halterung (21) einsetzbar ist, wobei der Handgriff (1) mittels einer Schraubverbindung (111, 4) an der Halterung (21) arretierbar ist.

4. Vorrichtung nach Anspruch 3, **dadurch gekennzeichnet,** daß die Halterung (21) kreisschalenförmig ausgebildet ist und eine U-förmige, radial geöffnete Ausnehmung (210) aufweist, in die die mit mindestens einem Gewinde (111) und mindestens einer aufschraubbaren Kappe (4) versehene Achse (11) derart einsetzbar ist, daß an der Halterung (21) ein Achsabschnitt (110) absteht, auf den eine Ringscheibe (3) formschlüssig bis in die Halterung (21) aufschiebbar ist.

5. Vorrichtung nach Anspruch 4, **dadurch gekennzeichnet,** daß die kreisschalenförmige Halterung (21) und die Ringschreibe (3) jeweils eine ineinandergreifende Verzahnung (212, 32) aufweisen.

6. Vorrichtung nach Anspruch 4 oder 5, **dadurch gekennzeichnet,** daß der Achsabschnitt (110) abgeflacht ausgebildet ist und die Ringscheibe (3) eine entsprechend ausgebildete, halbmondförmige Ringöffnung aufweist, daß die U-förmige Ausnehmung (210) aus einer Kreisöffnung (211) und einem gegenüber dem Kreisdurchmesser verjüngten Außenabschnitt (213) besteht, in den der abgeflachte Achsabschnitt (110) nur dann einsetzbar ist, wenn dessen Abflachung (112) im wesentlichen parallel zur Einsetzrichtung ausgerichtet ist.

7. Vorrichtung nach einem der vorangehenden Ansprüche, **dadurch gekennzeichnet,** daß die Kappe (4) eine profilierte Griffläche (41) aufweist.

8. Vorrichtung nach einem der vorangehenden Ansprüche, **dadurch gekennzeichnet,** daß der Handgriff (1) an seiner Unterseite und/oder Oberseite mit Rippen (12) versehen ist.

9. Vorrichtung nach einem der vorangehenden Ansprüche, **dadurch gekennzeichnet,** daß die Grundplatte (2) an ihrer dem Handgriff (1) gegenüberliegenden Kante mit mindestens einem rutschhemmenden Element (6) verbunden ist.

10. Vorrichtung nach Anspruch 9, **dadurch gekennzeichnet,** daß das rutschhemmende Element aus einem längsgeschlitzten, mit Längsrippen versehenen Gummischlauch (6) besteht, der mit einem an der Grundplatte (2) ausgebildeten, im Querschnitt kreisflächig erweiterten Steg (26) form- und/oder reibschlüssig verbindbar ist.

## Claims

1. Device for chopping up foodstuffs, consisting of a base plate (2) provided with a handle (1) wherein the article to be shredded is moved to and fro over the surface (23) of the base plate (2), and a shredding element (5) is mounted in the base plate (2)
characterised in that the handle (1) is swivel connected to the base plate (2).

2. Device according to claim 1 characterised in that the swivel handle (1) is lockable in any angular position relative to the base plate (2).

3. Device according to claim 1 or 2 characterised in that the handle (1) is provided with an axle (11) which can be inserted into at least one holder (21) connected to the base plate (2) wherein the handle (1) is lockable on the holder (21) by means of a screw connection (111, 4).

4. Device according to claim 3 characterised in that the holder (21) is designed like a circular dish and has a U-shaped radial opened recess (210) into which can be inserted the axle (11) which is provided with at least one thread (111) and at least one screw-on cap (4) so that an axial section (110) protrudes on the holder (21) onto which a ring disc (3) can be pushed until it locks positively into the holder (21).

5. Device according to claim 4 characterised in that the circular dish shaped holder (21) and the ring disc (3) each have an interengaging gearing (212, 32).

6. Device according to claim 4 or 5 characterised in that the axial section (110) is designed flattened and the ring disc (3) has a correspondingly designed half-moon shaped ring opening, that the U-shaped recess (210) consists of a circular opening (211) and an outer section (213) tapered relative to the circle diameter so that the flattened axial section (110) can only be inserted in same when the flattened area (112) is aligned substantially parallel to the insert direction.

7. Device according to one of the preceding claims, characterised in that the cap (4) has a profiled grip face (41).

8. Device according to one of the preceding claims, characterised in that the handle (1) is provided on its underneath and/or top side with ribs (12).

9. Device according to one of the preceding claims, characterised in that the base plate (2) is connected at its edge opposite the handle (1) to at least one non-slip element (6).

10. Device according to claim 9 characterised in that the non-slip element consists of an oblong slit rubber tube (6) provided with longitudinal ribs and connectable through keyed and/or friction engagement with a web (26) which is formed on the base plate (2) and has a widened circular face in cross-section.

## Revendications

1. Dispositif de fragmentation de produits alimentaires, comprenant une plaque de base (2) qui est pourvue d'un manche (1) et par-dessus la surface (23) de laquelle la matière à fragmenter peut être déplacée en va-et-vient, et un élément de fragmentation (5) agencé dans la plaque de base (2), caractérisé en ce que le manche (1) est relié à la plaque de base (2) de manière à pouvoir pivoter.

2. Dispositif suivant la revendication 1, caractérisé en ce que le manche (1) capable de pivoter peut être bloqué dans n'importe quelle position angulaire par rapport à la plaque de base (2).

3. Dispositif suivant l'une ou l'autre des revendications 1 et 2, caractérisé en ce que le manche (1) est pourvu d'un axe (11) qui peut être introduit dans au moins un support (21) relié à la plaque de base (2), le manche (1) pouvant être bloqué sur le support (21) au moyen d'une liaison à visser (111, 4).

4. Dispositif suivant la revendication 3, caractérisé en ce que le support (21) est réalisé sous la forme d'une coque circulaire et en ce qu'il présente un évidement (210) en forme de U qui est ouvert radialement et dans lequel l'axe (11), pourvu d'au moins un filet (111) et d'au moins un capuchon vissable (4), peut être introduit de telle façon que, sur le support (21), un tronçon d'axe (110) fasse saillie sur lequel une rondelle (3) peut être emmanchée en réalisant une liaison par la forme jusque dans le support (21).

5. Dispositif suivant la revendication 4, caractérisé en ce que le support en forme de coque circulaire (21) et la rondelle (3) présentent chacun une denture (212, 32) entrant mutuellement en prise.

6. Dispositif suivant l'une des revendications 4 et 5, caractérisé en ce que le tronçon d'axe (110) est réalisé sous une forme aplatie et en ce que la rondelle (3) présente une ouverture en forme de croissant, réalisée de manière correspondante, en ce que l'évidement en forme de U (210) est constitué d'une ouverture circulaire (211) et d'une section externe (213) qui s'amincit par rapport au diamètre du cercle et dans laquelle le tronçon d'axe aplati (110) ne peut être introduit que lorsque son méplat (112) est orienté sensiblement parallèlement à la direction d'introduction.

7. Dispositif suivant l'une des revendications précédentes, caractérisé en ce que le capuchon (4) présente une surface de prise (41) profilée.

8. Dispositif suivant l'une des revendications précédentes, caractérisé en ce que le manche (1) est pourvu de nervures (12) sur son côté inférieur et/ou supérieur.

9. Dispositif suivant l'une des revendications précédentes, caractérisé en ce que la plaque de base (2) est reliée à au moins un élément freinant le glissement (6) sur son bord opposé au manche (1).

10. Dispositif suivant la revendication 9, caractérisé en ce que l'élément freinant le glissement est constitué d'un conduit flexible (6) en caoutchouc qui est fendu longitudinalement, est pourvu de nervures longitudinales et peut être relié, par une liaison de forme et/ou par une liaison due au frottement, à une saillie (26), qui est réalisée sur la plaque de base (2) et s'élargit de façon à former un cercle en section transversale.
